# EUROPÄISCHE PATENTSCHRIFT

(11) **EP 3 554 759 B1**
(45) Veröffentlichungstag und Bekanntmachung des Hinweises auf die Patenterteilung: **18.01.2023**
(21) Anmeldenummer: 17787160.5
(22) Anmeldetag: 18.10.2017
(51) Int. Cl.: B23Q 1/00, B23Q 5/10, B23Q 17/22

(54) **DREHVORRICHTUNG**
ROTATING DEVICE
DISPOSITIF DE ROTATION

(30) Priorität: 19.12.2016 DE 102016124843
(43) Veröffentlichungstag der Anmeldung: 23.10.2019
(60) Teilanmeldung: 20173622.0
(73) Patentinhaber: Taktomat Kurvengesteuerte Antriebssysteme GmbH, 86554 Pöttmes (DE)
(72) Erfinder: HOFSTETTER, Norbert, 86676 Hollerbach (DE)
(74) Vertreter: Glück Kritzenberger Patentanwälte PartGmbB
(86) Internationale Anmeldenummer: PCT/EP2017/076632
(87) Internationale Veröffentlichungsnummer: WO 2018/114083

(56) Entgegenhaltungen:
- EP-A1- 0 937 539
- EP-A2- 2 082 828
- CN-A- 103 542 241
- DE-A1- 10 259 215
- DE-A1-102014 205 097
- DE-C1- 10 204 965

## Beschreibung

Die Erfindung bezieht sich auf eine Drehvorrichtung zur Aufnahme von mehreren Bearbeitungs- und Handlingseinheiten.

Derartige Drehvorrichtungen, die dem Fachmann auch als Drehtische bekannt sind, werden üblicherweise in der Herstellung und/oder Bearbeitung und/oder Verarbeitung von Werkstücken verwendet. Insbesondere werden derartige Drehvorrichtungen auch als Rundtakttische für schrittweise Arbeitsfolgen und Fertigungsprozesse verwendet, wobei sich solcherart ausgebildete Drehvorrichtungen sowohl für den horizontalen Einsatz als auch für den Vertikalbetrieb eignen. Beispielsweise werden Rundtakttische in Fertigungsstraßen der Automobilindustrie verwendet, um auf Trägergestellen beförderte Fahrzeugkarosserien insbesondere während der einzelnen Montageschritte an den entsprechenden Montagepositionen von den Trägergestellen auf durch Bearbeitungs- und Handlingseinheiten gebildete indexierte Halteposition abzusenken.

Mithin können derartige Drehvorrichtungen u.a. einen um eine Dreh- oder Schwenkachse rotierenden Drehkörper aufweisen, an dem beispielsweise mehrere Bearbeitungs- und Handlingseinheiten angeordnet sind. Hierfür können die Drehvorrichtungen durch einen Antrieb gesteuert angetrieben werden. Insbesondere muss die gesteuerte Antriebsbewegung dabei den Drehkörper um einen sehr exakt vorgegeben Schrittwinkel weiterbewegen, also weiterdrehen. In der anschließend erreichten Halteposition, in der dann beispielsweise die Bearbeitung des Werkstückes erfolgt, müssen der Drehkörper bzw. die daran angeordneten Bearbeitungs- und Handlingseinheiten weitgehend spielarm, d.h. lagefixiert, arretiert werden.

Gefordert wird für derartige Drehvorrichtungen damit eine hohe Genauigkeit und Spielfreiheit des Antriebs, so dass jede erforderliche Dreh- oder Winkelstellung des Drehkörpers bzw. der daran angeordneten mehreren Bearbeitungs- und Handlingseinheiten mit hoher Präzision angefahren werden kann. Insbesondere wird oftmals auch gefordert, dass die angefahrene Dreh- oder Winkelstellung auch bei abgeschaltetem Antrieb stabil und exakt eingehalten wird. Solche Drehvorrichtungen sind zum Beispiel aus der Druckschrift DE 10 2014 205097 A1 oder DE 102 04 965 C1 bekannt.

Aus der auf die Anmelderin zurückgehenden Druckschrift DE 10 2013 109 307 A1 ist dabei eine Drehvorrichtung mit einer Aufnahme zur Aufnahme eines Werkstückes oder Werkzeuges bekannt geworden, bei der die Aufnahme durch einen Antrieb gesteuert um eine Aufnahmeachse schenk- oder drehbar ist und bei der der Antrieb als Antriebselement einen Torquemotor aufweist. Die Druckschrift DE 10 2013 109 307 A1 zeichnet sich dadurch aus, dass mit einer Ausgangswelle des Torquemotors eine Trommelkurve unmittelbar verbunden ist, die eine Achse der Ausgangswelle wendelartig umschließt und in die für den Antrieb der Aufnahme mit dieser verbundene Mitnehmer eingreifen. In anderen Worten wird also die um eine Aufnahmeachse drehbar gelagerte Aufnahme indirekt über den Torquemotor angetrieben, indem dieser eine lotrecht zur Aufnahmeachse drehende Trommelkurve antreibt. Das Ineinandergreifen der Aufnahme in die Trommelkurve erfolgt nach Art eines Getriebes mittel der Mitnehmer.

Insgesamt wird durch die Umlenkung der Antriebsbewegung der Ausgangswelle des Torquemotors auf die anzutreibende Aufnahme ein verhältnismäßig großer Bauraum zur Anordnung der Drehvorrichtung in beispielweise einer Fertigungslinie benötigt. Ferner gilt es zu berücksichtigen, dass die an der Aufnahme vorgesehenen Bearbeitungs- und Handlingseinheiten oftmals eine Energie- und/oder Datenversorgung in Form von beispielweise Energie-und/oder Datenversorgungsleitungen zum Betrieb der Bearbeitungs- und Handlingseinheiten benötigen. Die Zuführung derartiger Leitungen insbesondere bei sich rotierendem Drehkörper ist daher umständlich und nur schwer konstruktiv zu lösen.

Aufgabe der Erfindung ist es daher, eine Drehvorrichtung zur Aufnahme von mehreren Bearbeitungs- und Handlingseinheiten aufzuzeigen, welche sich bei reduziertem Bauraum durch eine hochpräzise und nahezu toleranzfreie Drehung des Drehkörpers auszeichnet und gleichzeitig eine möglichst einfache konstruktive Anbindung von Leitungen zur Energie- und/oder Datenversorgung der Bearbeitungs- und Handlingseinheiten ermöglicht. Die Unteransprüche betreffen dabei besonders vorteilhafte Ausführungsvarianten der Erfindung.

Der wesentliche Aspekt der vorliegenden Erfindung ist darin zu sehen, eine Drehvorrichtung zur Aufnahme von mehreren Bearbeitungs- und Handlingseinheiten vorzusehen, umfassend wenigstens einen Trägerkörper mit einem darin um eine Dreh- oder Schwenkachse drehbar gelagerten Hohlwellenelement, bei dem an einem freiendseitigen Ende ein Drehkörper zur Aufnahme der Bearbeitungs- und Handlingseinheiten angeordnet ist und ein gegenüberliegender, nach außen abstehender Abschnitt des Hohlwellenelementes von einer Torque-Motor-Einheit aufgenommen ist, die zum direkten Antrieb des Hohlwellenelementes um die Dreh- oder Schwenkachse ausgebildet ist. Besonders vorteilhaft ist damit ein Antrieb des Drehkörpers ohne Zwischenschaltung einer Getriebeeinrichtung möglich, da das den Drehkörper antreibende Hohlwellenelement unmittelbar, also ohne Zwischenschaltung einer Getriebeeinrichtung, von der Torque-Motor-Einheit aufgenommen ist, die ihrerseits das Hohlwellenelement direkt antreibt. Besonders vorteilhaft fällt damit die Dreh- oder Schwenkachse des Hohlwellenelementes mit der Drehachse des Rotors der Torque-Motor-Einheit zusammen. Eine Umlenkung der Drehbewegung ist damit nicht notwendig, so dass die erfindungsgemäße Drehvorrichtung mithin deutlich weniger Bauraum als eine im Vergleich dazu aus dem Stand der Technik bekannte Drehvorrichtung benötigt. Weiterhin kann der Drehkörper eine mit der Wellenöffnung fluchtende zentrale Öffnung zur Durchführung von Versorgungsleitungen oder dergleichen aufweisen, so dass damit eine einfache konstruktive Anbindung von Leitungen zur Energie- und/oder Datenversorgung an die Bearbeitungs- und Handlingseinheiten des Drehkörpers ermöglicht wird. Vorteilhaft könne die mehreren Bearbeitungs- und Handlingseinheiten in gleichmäßigen oder näherungsweise gleichmäßigen Winkelabständen um die Dreh- oder Schwenkachse verteilt an dem Drehkörper angeordnet sein.

Erfindungsgemäß weist der Drehkörper eine zentrale Öffnung zur Durchführung wenigstens einer flexiblen Energie- und/oder Datenleitungen auf. Dabei kann die zentrale Öffnung mit einer Hohlwellenöffnung fluchtend ausgebildet sein. Weiterhin vorteilhaft können zur Beaufschlagung der mehreren Bearbeitungs- und Handlingseinheiten mit Energie und/oder Daten die wenigstens eine flexible Energie- und/oder Datenleitungen in der Hohlwellenöffnung des Hohlwellenelementes an die zentrale Öffnung des Drehkörpers und durch diese an eine entsprechende Bearbeitungs- und Handlingseinheit geführt ist.

In einer vorteilhaften Ausführungsvariante kann die Torque-Motor-Einheit entlang der Dreh- oder Schwenkachse seitlich an dem Trägerkörper vorgesehen sein und zwar derart, dass die Torque-Motor-Einheit das Hohlwellenelement radial im Bereich des Abschnitts umschließt.

Bevorzugt kann auch vorgesehen sein, dass sich die Torque-Motor-Einheit unmittelbar benachbart an den Trägerkörper entlang der Dreh- und Schwenkachse anschließt, und zwar auf der dem Drehkörper abgewandten Seite. Vorteilhaft ist die Torque-Motor-Einheit (7) an dem Trägerkörper befestigt.

Dabei kann die Torque-Motor-Einheit vorteilhaft wenigstens einen Stator sowie einen relativ dazu um eine Antriebsachse drehbaren Rotor aufweisen. Weiterhin vorteilhaft kann der Rotor drehfest an dem Abschnitt des Hohlwellenelementes aufgenommen, insbesondere an dem Abschnitt befestigt sein. Gemäß einer alternativen Ausführungsvariante der Erfindung kann der Abschnitt als Rotor der Torque-Motor-Einheit ausgebildet sein. Ferner kann vorteilhafter Weise vorgesehen sein, dass der Rotor der Torque-Motor-Einheit um eine Antriebsachse dreht, die mit der Dreh- und Schwenkachse zusammenfällt.

Weiterhin vorteilhaft kann eine die Drehstellung des Drehkörper und/oder der Torque-Motor-Einheit erfassende Sensoreinrichtung vorgesehen sein.

Schließlich kann vorteilhaft wenigstens eine Arretiereinrichtung vorgesehen sein, die über ein verschiebbares Bolzenelement mit an dem Drehkörper vorgesehenen Indexöffnungen zusammenwirkt.

Unter "getaktet" wird im Rahmen der vorliegenden Erfindung eine intermittierende Bewegungen verstanden, die sich im Gegensatz zu einer kontinuierlichen Bewegung durch schrittweise oder periodisch wiederkehrende Bewegungsabläufe auszeichnen, und zwar mit einem Stillstand nach oder vor jedem Bewegungsschritt. Ein intermittierend bewegtes Element, das beispielsweise eine, um einen gewissen Winkelbetrag rotierende Abtriebswelle einer Torque-Motor-Einheit sein kann, vollzieht hierbei ein Bewegungsprofil, bei dem die Abtriebswelle periodisch nahezu stoß- und/oder ruckfrei auf eine gewisse Winkelgeschwindigkeit beschleunigt und anschließend wieder abgebremst wird.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an einem Ausführungsbeispiel näher erläutert. Es zeigen:

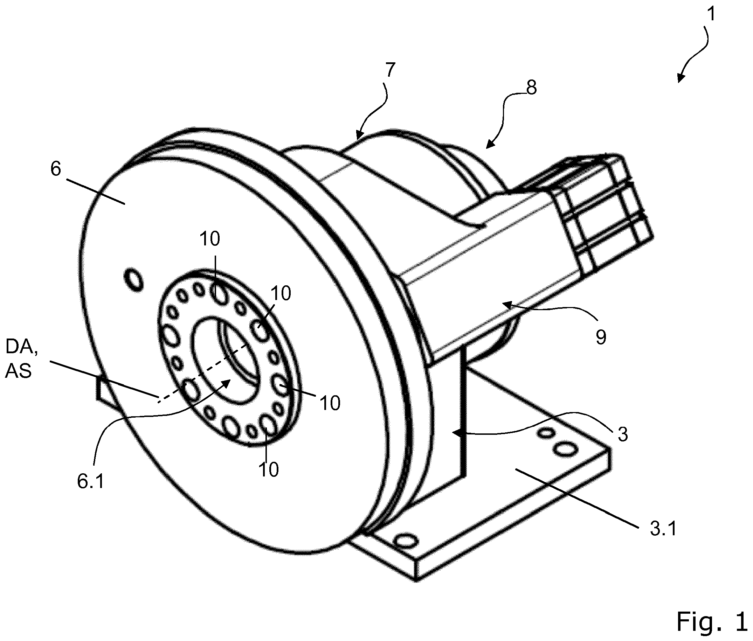

- Fig. 1: in vereinfachter perspektivischer Darstellung eine beispielhafte Ausführungsvariante einer erfindungsgemäßen Drehvorrichtung;
- Fig. 2: in Seitenansicht eine schematisierte Schnittdarstellung im Bereich des Hohlwellenelementes einer Drehvorrichtung gemäß Figur 1,

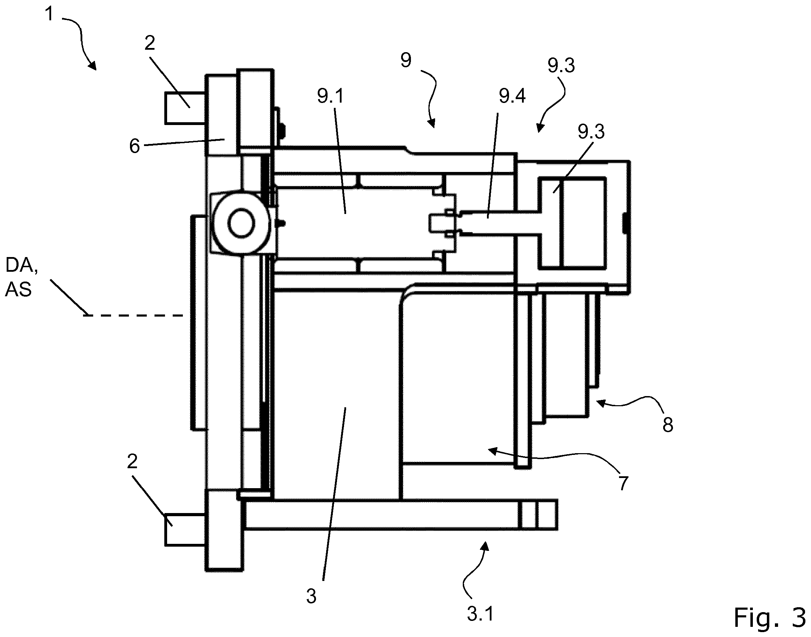

- Fig. 3: in Seitenansicht eine weitere schematisierte Schnittdarstellung im Bereich der Arretiereinrichtung einer Drehvorrichtung gemäß Figur 1.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

In den Figuren ist mit 1 eine beispielhafte Ausführungsvariante einer erfindungsgemäßen Drehvorrichtung zur Aufnahme von mehreren Bearbeitungs- und Handlingseinheiten 2 gezeigt, die wenigstens einen Trägerkörper 3 mit einem darin um eine Dreh- oder Schwenkachse DA drehbar gelagerten Hohlwellenelement 4 umfasst. Bei den nur stilisiert in den Figuren dargestellten Bearbeitungs- und Handlingseinheiten 2 kann es sich insbesondere um Bodenspanner handeln, die beispielsweise verwendet werden, um auf Trägergestellen entlang einer Montagelinie beförderte Fahrzeugkarosserien insbesondere während der einzelnen Montageschritte an den entsprechenden Montagepositionen von den Trägergestellen auf die entsprechenden an einer Drehvorrichtung 1 angeordneten Bodenspanner abzusenken.

In der Regel sind hierfür je nach Fahrzeugtyp, bzw. Fahrzeugkarosse zwischen vier und sechs Bodenspanner, und damit auch vier bis sechs Drehvorrichtungen 1 erforderlich, die um ein sich in einer Montageposition befindliches Trägergestell angeordnet sind. Vorzugsweise sind dabei jeweils zwei Drehvorrichtungen 1 an entlang der Längsseite des Trägergestells gegenüberliegenden Positionen vorgesehen, beispielweise derart, dass die entsprechende Karosserie sowohl in ihrem vorderen, als auch hinteren Bereich auf jeweils zwei gegenüberliegenden oder im Wesentlichen gegenüberliegen Auflagepunkten abgesenkt werden kann. Vorzugsweise können an einer Drehvorrichtung 1 mehrere Bearbeitungs- und Handlingseinheiten 2, beispielweise unterschiedliche Bodenspanner, vorgesehen sein, die beispielsweise an unterschiedliche Abmessungen der Fahrzeugkarossen bzw. Fahrzeugtypen angepasst sind. Erfindungsgemäß sind die mehreren Bearbeitungs- und Handlingseinheiten 2 an einem Drehkörper 6 fest, jedoch austauschbar, beispielsweise verschraubt, angeordnet. Die mehreren Bearbeitungs- und Handlingseinheiten 2 können in gleichmäßigen oder näherungsweise gleichmäßigen Winkelabständen um die Dreh- oder Schwenkachse DA verteilt an dem Drehkörper 6 angeordnet sein, in beispielweise einen gleichen radialen Abstand zur die Dreh- oder Schwenkachse DA. Besonders vorteilhaft sind vier Bearbeitungs- und Handlingseinheiten 2 an dem Drehkörper 6 vorgesehen, wobei die Bearbeitungs- und Handlingseinheiten 2 jeweils paarweise gegenüberliegend an dem Drehkörper 6 angeordnet sind.

Hierbei kann es erforderlich sein, dass die Bearbeitungs- und Handlingseinheiten 2 mit Energie und/oder Daten beaufschlagt werden. Die Bereitstellung und/oder Zuführung der für das Betreiben der entsprechenden Bearbeitungs- und Handlingseinheiten 2 notwendigen Energie und/oder Daten kann über vorzugsweise flexible Energie- und/oder Datenleitungen DL erfolgen, die insbesondere von außerhalb der entsprechenden Drehvorrichtung 1 über, bzw. in dem Hohlwellenelement 4 an die jeweiligen Bearbeitungs- und Handlingseinheiten 2 geführt sein können.

Der Trägerkörper 3 ist dabei aus einem stabilen Material, beispielsweise einem metallischen Werkstoff hergestellt, und dazu ausgebildet, die einzelnen, vorzugsweise sämtliche, Bauteile bzw. Baugruppen der Drehvorrichtung 1 zu halten bzw. aufzunehmen. Insbesondere kann der Trägerkörper einen Befestigungsabschnitt 3.1 aufweisen, über den die Drehvorrichtung 1 an beispielsweise einem Montagegestell einer Fertigungslinie der Automobilindustrie befestigbar ist. Der Befestigungsabschnitt 3.1 kann dabei als Befestigungsplatte ausgebildet sein, die vorzugsweise einstückig mit dem Trägerkörper 3 ausgebildet ist.

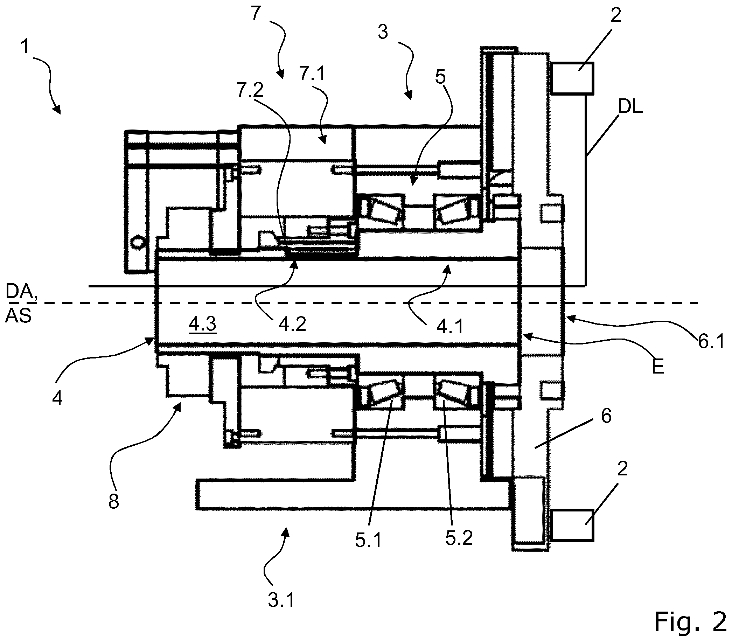

Ferner nimmt der Trägerkörper 3 dabei in seinem Inneren das um die Dreh- oder Schwenkachse DA drehbar gelagerte Hohlwellenelement 4 auf, welches vorzugsweise als metallische Hohlwelle mit einem freien Innenvolumen, d.h. nicht massiv, ausgebildet sein kann. Zur drehbaren Lagerung des Hohlwellenelementes 4 in dem Trägerkörper 3 können dabei Lagereinrichtungen 5, beispielsweise Wälzlager vorgesehen sein, die kontaktschlüssig zwischen der Außenmantelfläche des in dem Trägerkörper 3 aufgenommen ersten Abschnittes 4.1 des Hohlwellenelementes 4 und dem Trägerkörper 3 vorgesehen sein können. Insbesondere liegen die Lagereinrichtungen 5 dabei kontaktschlüssig an der Außenmantelfläche des Hohlwellenelementes 4 an, und zwar derart, dass die Lagereinrichtungen die Außenmantelfläche des Trägerkörpers 3 konzentrisch um die Dreh- oder Schwenkachse DA vorzugsweise vollumfänglich kontaktschlüssig umschließen. Gemäß der gezeigten Ausführungsvariante der Figur 2 weist die Drehvorrichtung 1 dabei zwei Lagereinrichtungen 5, nämlich eine erste sowie eine zweite Lagereinrichtung 5.1, 5.2 auf, die entlang der Dreh- oder Schwenkachse DA beabstandet zueinander vorgesehen sein können.

Erfindungsgemäß ist an einem freien Ende E des Hohlwellenelementes 4 ein Drehkörper 6 zur Aufnahme der Bearbeitungs- und Handlingseinheiten 2 angeordnet. Insbesondere ist der Drehkörper 6 dabei an dem freien Ende E drehfest, also kinematisch gekoppelt, an dem Hohlwellenelement 4 vorgesehen, beispielweise an dem Hohlwellenelement 4 fest aber lösbar, insbesondere verschraubt, angeordnet. Der Drehkörper 6 kann dabei als rotationssymmetrisch zur Dreh- oder Schenkachse DA, beispielsweise scheibenförmig, ausgebildet sein und aus einem metallischen Werkstoff herstellt werden. Beispielweise ist der Drehkörper 6 als metallische, scheibenförmige Platte, vorzugsweise als Drehscheibe, ausgebildet. Ferner weist der Drehkörper 6 eine zentrale, d.h. mittige, Öffnung 6.1 zur Durchführung von Versorgungsleitungen in Form von flexiblen Energie- und/oder Datenleitungen DL auf, wobei die Öffnung 6.1 vorzugsweise mit einer Hohlwellenöffnung 4.3, also dem freien Innenvolumen des Hohlwellenelementes 4, fluchtend ausgebildet ist.

Mithin weist das Hohlwellenelement 4 zudem einen, dem freien Ende E gegenüberliegenden, und nach außen abstehenden, d.h. seitlich über den Trägerkörper 3 überstehenden bzw. diesen seitlich überragenden, Abschnitt 4.2 auf, der von einer Torque-Motor-Einheit 7 aufgenommen ist, die zum direkten Antrieb des Hohlwellenelementes 4 um die Dreh- oder Schwenkachse DA ausgebildet ist. Insbesondere kann die Torque-Motor-Einheit 7 dabei seitlich an dem Trägerkörper 3 lösbar befestigt, beispielsweise angeflanscht, sein und zwar derart, dass die Torque-Motor-Einheit 7 das Hohlwellenelement 4 radial im Bereich des Abschnitt 4.2 umschließt. Vorzugsweise schließt sich die Torque-Motor-Einheit 7 damit unmittelbar benachbart an den Trägerkörper 3 entlang der Dreh- und Schwenkachse DA an, und zwar auf der dem Drehkörper 6 abgewandten Seite.

Dabei ist das Hohlwellenelement 4 unmittelbar, d.h. getriebelos, durch die Torque-Motor-Einheit 7 in beiden Drehrichtungen, also sowohl in, als auch gegen den Uhrzeigersinn, vorzugsweise um jeweils wenigstens 360° antreibbar ausgebildet. Mittels der Torque-Motor-Einheit 7 ist das Hohlwellenelement 4 getaktet und/oder kontinuierlich antreibbar. Insbesondere ist die Drehbewegung des Hohlwellenelementes 4 getaktet, beispielsweise stufenlos oder im Wesentlichen stufenlos oder in sehr kleinen Stufen steuer- und/oder regelbar, ausgebildet, wobei eine Taktung einem vordefinierbaren Schrittwinkel, also einem festen Drehwinkel des Hohlwellenelementes 4 entsprechen kann. Zudem sind auch die von der Torque-Motor-Einheit 7 jeweils während einer Taktung gefahrenen Winkelgeschwindigkeiten steuer- und/oder regelbar ausgebildet. Vorzugsweise ist die Torque-Motor-Einheit 7 nur während der eigentlichen Antriebs- bzw. Drehbewegung mit elektrischer Energie beaufschlagt.

Dabei umfasst die Torque-Motor-Einheit 7 wenigstens einen Stator 7.1 sowie einen sich relativ dazu um die Dreh- und Schwenkachse (DA) drehenden Rotor 7.2. In einer bevorzugten Ausführungsvariante ist die Torque-Motor-Einheit 7 über ihren Stator 7.1 mit dem Trägerkörper 3 fest verbunden, bzw. an diesem angeordnet, insbesondere angeflanscht. Weiterhin ist der Rotor 7.2 fest, insbesondere drehfest, mit dem Abschnitt 4.2 des Hohlwellenelementes 4 verbunden und überträgt damit die Drehbewegung unmittelbar auf das Hohlwellenelement 4. In einer alternativen Ausführungsvariante der Erfindung kann auch der Abschnitt 4.2 des Hohlwellenelementes 4 den Rotor 7.2 der Torque-Motor-Einheit 7 bilden. Besonders vorteilhaft dreht dabei der Rotor 7.2 der Torque-Motor-Einheit 7 um eine Antriebsachse AS, die mit der Dreh- und/oder Schwenkachse DA zusammenfällt.

Die Ansteuerung der Torque-Motor-Einheit 7 kann über eine nicht weitergehend dargestellte elektrische und/oder elektronische Steuereinrichtung erfolgen, und zwar vorzugsweise unter Einbindung bzw. die Abhängigkeit von dem Signal wenigstens einer die jeweilige Drehstellung der Torque-Motor-Einheit 7 erfassenden Sensoreinrichtung 8. Die Sensoreinrichtung 8 kann beispielweise als Inkrementalgeber ausgebildet sein.

Ferner weist die Drehvorrichtung 1 zur Verrieglung bzw. mechanischen Arretierung des Drehkörpers 6 in dessen jeweiliger Drehwinkelstellung eine Arretiereinrichtung 9 auf. In anderen Worten kann also mittels der Arretiereinrichtung 9 der Drehkörper 6 verdrehsicher gegen eine Verdrehung um die Dreh- oder Schwenkachse DA arretiert werden. Hierfür kann der Drehkörper 6 mehrere Indexöffnungen 10 aufweisen, die vorzugsweise radial beabstandet um die Öffnung 6.1, bzw. die Dreh- oder Schwenkachse DA vorgesehen sind.

Bevorzugt sind die Indexöffnungen 10 dabei in gleichmäßigen oder näherungsweise gleichmäßigen Winkelabständen auf einem identischen Radius um die Dreh- oder Schwenkachse DA verteilt vorgesehen. Weiterhin sind die Indexöffnungen 10 derart ausgebildet, dass sie (Indexöffnungen 10) den Drehkörper 6 vollständig in seiner Dicke durchdringen.

Dabei weist die Arretiereinrichtung 9 wenigstens ein beispielsweise über die Steuereinrichtung gesteuert und/oder geregelt verschiebbares Bolzenelement 9.1 auf, das insbesondere als Indexstift ausgebildet sein kann, der zur Arretierung des Drehkörpers 6 zumindest teilweise in eine korrespondierende Indexöffnung 10 eingefahren (Rast- bzw. Arretierposition) und/oder aus der Indexöffnung 10 wieder vollständig ausgefahren werden kann (Freigabeposition). In der eingefahrenen Rastposition, in der das Bolzenelement 9.1 in die Indexöffnung 10 vorzugsweise vollständig eingreift, ist der Drehkörper 6 mechanisch lagefixiert, d.h. gegen eine Verdrehung um die Dreh- oder Schwenkachse DA gesichert, während das Bolzenelement 9.1 den Drehkörper 6 in der ausgefahrenen Freigabeposition für eine weitere Umdrehung um einen vorbestimmbaren Drehwinkel vollständig freigibt, also mechanisch nicht blockiert.

Beispielsweise kann die Arretiereinrichtung 9 zum Verfahren des Bolzenelementes 9 eine gesteuert und/oder geregelt betreibbare Arbeitszylindereinrichtung 9.2 umfassen, die wenigstens einen in einem Zylinder 9.3 verfahrbar aufgenommen Kolben 9.4 aufweist, der kraftschlüssig mit dem Bolzenelement 9.1 zusammenwirkt. Die Arbeitszylindereinrichtung 9.2 kann beispielsweise pneumatisch elektrisch betrieben ausgebildet sein.

### Bezugszeichenliste

- 1: Drehvorrichtung
- 2: Bearbeitungs- und Handlingseinheit
- 3: Trägerkörper
- 3.1: Befestigungsabschnitt
- 4: Hohlwellenelement
- 4.1: erster Abschnitt
- 4.2: überstehender Abschnitt
- 4.3: Hohlwellenöffnung
- 5: Lagereinrichtung
- 5.1: erste Lagereinrichtung
- 5.2: zweite Lagereinrichtung
- 6: Drehkörper
- 6.1: Öffnung
- 7: Torque-Motor-Einheit
- 7.1: Stator
- 7.2: Rotor
- 8: Sensoreinrichtung
- 9: Arretiereinrichtung
- 9.1: Bolzenelement
- 9.2: Arbeitzylindereinrichtung
- 9.3: Zylinder
- 9.4: Kolben
- 10: Indexöffnung

- AS: Antriebsachse
- DA: Dreh- oder Schwenkachse
- DL: Energie- oder Datenleitung
- E: freies Ende

## Patentansprüche

1. Drehvorrichtung (1) zur Aufnahme von mehreren Bearbeitungs- und Handlingseinheiten (2), umfassend wenigstens einen Trägerkörper (3) mit einem darin um eine Dreh- oder Schwenkachse (DA) drehbar gelagerten Hohlwellenelement (4), bei dem an einem freiseitigen Ende (E) ein Drehkörper (6) zur Aufnahme der Bearbeitungs- und Handlingseinheiten (2) fest jedoch lösbar angeordnet ist und ein gegenüberliegender, nach außen abstehender Abschnitt (4.2) des Hohlwellenelementes (4) von einer Torque-Motor-Einheit (7) aufgenommen ist, die zum direkten Antrieb des Hohlwellenelementes (4) um die Dreh- oder Schwenkachse (DA) ausgebildet ist, und wobei der Drehkörper (6) eine zentrale Öffnung (6.1) zur Durchführung wenigstens einer flexiblen Energie- und/oder Datenleitungen (DL) aufweist.

2. Drehvorrichtung nach Anspruch 1, **dadurch gekennzeichnet, dass** die mehreren Bearbeitungs- und Handlingseinheiten (2) in gleichmäßigen oder näherungsweise gleichmäßigen Winkelabständen um die Dreh- oder Schwenkachse (DA) verteilt an dem Drehkörper (6) angeordnet werden können.

3. Drehvorrichtung nach Anspruch 1 oder 2, **dadurch gekennzeichnet, dass** die zentrale Öffnung (6.1) fluchtend mit einer Hohlwellenöffnung (4.3) ausgebildet ist.

4. Drehvorrichtung nach einem der vorhergehenden Ansprüche, **dadurch gekennzeichnet, dass** zur Beaufschlagung der mehreren Bearbeitungs- und Handlingseinheiten (2) mit Energie und/oder Daten die wenigstens eine flexible Energie- und/oder Datenleitungen (DL) in der Hohlwellenöffnung (4.3) des Hohlwellenelementes (4) an die zentrale Öffnung (6.1) des Drehkörpers (6) und durch diese an eine entsprechende Bearbeitungs- und Handlingseinheit (2) geführt ist.

5. Drehvorrichtung nach einem der vorhergehenden Ansprüche, **dadurch gekennzeichnet, dass** die Torque-Motor-Einheit (7) entlang der Dreh- oder Schwenkachse (DA) seitlich an dem Trägerkörper (3) vorgesehen ist und zwar derart, dass die Torque-Motor-Einheit (7) das Hohlwellenelement (4) radial im Bereich des Abschnitts (4.2) umschließt.

6. Drehvorrichtung nach einem der vorhergehenden Ansprüche, **dadurch gekennzeichnet, dass** sich die Torque-Motor-Einheit (7) unmittelbar benachbart an den Trägerkörper (3) entlang der Dreh- und Schwenkachse (DA) anschließt, und zwar auf der dem Drehkörper (6) abgewandten Seite.

7. Drehvorrichtung nach einem der vorhergehenden Ansprüche, **dadurch gekennzeichnet, dass** die Torque-Motor-Einheit (7) an dem Trägerkörper (3) befestigt ist.

8. Drehvorrichtung nach einem der vorhergehenden Ansprüche, **dadurch gekennzeichnet, dass** die Torque-Motor-Einheit (7) wenigstens einen Stator (7.1) sowie einen relativ dazu um eine Antriebsachse (AS) drehbaren Rotor (7.2) aufweist.

9. Drehvorrichtung nach Anspruch 8, **dadurch gekennzeichnet, dass** der Rotor (7.2) drehfest an dem Abschnitt (4.2) des Hohlwellenelementes (4) aufgenommen, insbesondere an dem Abschnitt (4.2) befestigt ist.

10. Drehvorrichtung nach Anspruch 8, **dadurch gekennzeichnet, dass** der Abschnitt (4.2) als Rotor (7.2) der Torque-Motor-Einheit (7) ausgebildet ist.

11. Drehvorrichtung nach einem der Ansprüche 8 bis 10, **dadurch gekennzeichnet, dass** der Rotor (7.2) der Torque-Motor-Einheit (7) um eine Antriebsachse (AS) dreht, die mit der Dreh- und Schwenkachse (DA) zusammenfällt.

12. Drehvorrichtung nach einem der vorhergehenden Ansprüche, **gekennzeichnet durch** eine die Drehstellung des Drehkörper (6) und/oder der Torque-Motor-Einheit (7) erfassenden Sensoreinrichtung (8).

13. Drehvorrichtung nach einem der vorhergehenden Ansprüche, **dadurch gekennzeichnet, dass** wenigstens eine Arretiereinrichtung (9) vorgesehen ist, die über ein verschiebbares Bolzenelement (9.1) mit an dem Drehkörper (6) vorgesehenen Indexöffnungen (10) zusammenwirkt.

## Claims

1. Rotating device (1) for the reception of a plurality of machining and handling units (2), comprising at least one carrier body (3) with a hollow shaft element (4) mounted therein, which can be rotated about an axis of rotation or swivel (DA), in which
a rotary body (6) for the reception of the machining and handling units (2) is fixedly but detachably arranged at a free end (E), and an opposite, outwardly projecting section (4.2) of the hollow shaft element (4) is received by a torque motor unit (7), which is designed to drive the hollow shaft element (4) directly about the axis of rotation or swivel (DA), and wherein
the rotary body (6) comprises a central opening (6.1) for the passage of at least one flexible energy and/or data line (DL).

2. Rotating device according to Claim 1,
**characterised in that**,
the plurality of machining and handling units (2) can be arranged on the rotary body (6) at uniform, or approximately uniform, angular separations about the axis of rotation or swivel (DA).

3. Rotating device according to Claim 1 or 2,
**characterised in that**,
the central opening (6.1) is designed in alignment with a hollow shaft opening (4.3).

4. Rotating device according to one of the preceding claims,
**characterised in that**,
the at least one flexible energy and/or data line (DL) in the hollow shaft opening (4.3) of the hollow shaft element (4) is guided to the central opening (6.1) of the rotary body (6), and through the latter to a corresponding machining and handling unit (2), in order to apply energy and/or data to the plurality of machining and handling units (2).

5. Rotating device according to one of the preceding claims,
**characterised in that**,
the torque motor unit (7) is provided laterally on the carrier body (3) along the axis of rotation or swivel (DA), namely in such a way that the torque motor unit (7) radially surrounds the hollow shaft element (4) in the region of the section (4.2).

6. Rotating device according to one of the preceding claims,
**characterised in that**,
the torque motor unit (7) adjoins immediately adjacent to the carrier body (3) along the axis of rotation and swivel (DA), namely on the side facing away from the rotary body (6).

7. Rotating device according to one of the preceding claims,
**characterised in that**,
the torque motor unit (7) is attached to the carrier body (3).

8. Rotating device according to one of the preceding claims,
**characterised in that**,
the torque motor unit (7) comprises at least one stator (7.1), and a rotor (7.2) that can be rotated relative to the latter about a drive axis (AS).

9. Rotating device according to Claim 8,
**characterised in that**,
the rotor (7 .2) is received in a rotationally fixed manner on the section (4.2) of the hollow shaft element (4), in particular it is attached to the section (4.2).

10. Rotating device according to Claim 8,
**characterised in that**,
the section (4.2) is designed as a rotor (7.2) of the torque motor unit (7).

11. Rotating device according to one of the Claims 8 to 10,
**characterised in that**,
the rotor (7.2) of the torque motor unit (7) rotates about a drive axis (AS), which coincides with the axis of rotation and swivel (DA).

12. Rotating device according to one of the preceding claims,
**characterised by**,
a sensor device (8) recording the rotational position of the rotary body (6) and/or of the torque motor unit (7).

13. Rotating device according to one of the preceding claims,
**characterised in that**,
at least one locking device (9) is provided, which interacts with index openings (10) provided on the rotary body (6) by way of a moveable pin element (9.1).

## Revendications

1. Dispositif de rotation (1), destiné à recevoir plusieurs unités d'usinage et de manipulation (2), comprenant au moins un corps porteur (3) pourvu d'un élément d'arbre creux (4) logé dans celui-ci en étant susceptible de tourner autour d'un axe de rotation ou de pivotement (DA), sur lequel sur une extrémité (E) du côté libre, un corps rotatif (6) destiné à recevoir les unités d'usinage et de manipulation (2) est placé de manière fixe mais toutefois amovible et un tronçon (4.2) opposé, débordant vers l'extérieur de l'élément d'arbre creux (4) est réceptionné par une unité de moteur Torque (7), qui est conçue pour entraîner directement l'élément d'arbre creux (4) autour de l'axe de rotation ou de pivotement (DA), et le corps rotatif (6) comportant un orifice (6.1) central destiné à faire passer au moins une ligne électrique et / ou de données (DL) souple.

2. Dispositif de rotation selon la revendication 1, **caractérisé en ce que** les plusieurs unités d'usinage et de manipulation (2) peuvent être placées sur le corps rotatif (6), à des écarts angulaires réguliers ou approximativement réguliers, en distribution autour de l'axe de rotation ou de pivotement (DA).

3. Dispositif de rotation selon la revendication 1 ou 2, **caractérisé en ce que** l'orifice (6.1) central est conçu aligné avec d'un orifice (4.3) de l'arbre creux.

4. Dispositif de rotation selon l'une quelconque des revendications précédentes, **caractérisé en ce que** pour alimenter les plusieurs unités d'usinage et de manipulation (2) en énergie et / ou en données, l'au moins une ligne électrique et / ou de données (DL) souple dans l'orifice (4.3) de l'arbre creux de l'élément d'arbre creux (4) est tirée vers l'orifice (6.1) central du corps rotatif (6) et à travers celui-ci, vers une unité d'usinage et de manipulation (2) correspondante.

5. Dispositif de rotation selon l'une quelconque des revendications précédentes, **caractérisé en ce que** l'unité de moteur Torque (7) est prévue le long de l'axe de rotation ou de pivotement (DA), latéralement sur le corps porteur (3) et à savoir de telle sorte, que l'unité de moteur Torque (7) entoure l'élément d'arbre creux (4) en direction radiale, dans la zone du tronçon (4.2).

6. Dispositif de rotation selon l'une quelconque des revendications précédentes, **caractérisé en ce que** l'unité de moteur Torque (7) se raccorde directement au voisinage sur le corps porteur (3), le long de l'axe de rotation et de pivotement (DA), et à savoir sur le côté opposé au corps rotatif (6).

7. Dispositif de rotation selon l'une quelconque des revendications précédentes, **caractérisé en ce que** l'unité de moteur Torque (7) est fixée sur le corps porteur (3).

8. Dispositif de rotation selon l'une quelconque des revendications précédentes, **caractérisé en ce que** l'unité de moteur Torque (7) comporte au moins un stator (7.1), ainsi qu'un rotor (7.2) rotatif par rapport à celui-ci autour d'un axe d'entraînement (AS).

9. Dispositif de rotation selon la revendication 8, **caractérisé en ce que** le rotor (7.2) est réceptionné de manière solidaire en rotation sur le tronçon (4.2) de l'élément d'arbre creux (4), il est notamment fixé sur le tronçon (4.2).

10. Dispositif de rotation selon la revendication 8, **caractérisé en ce que** le tronçon (4.2) est conçu sous la forme d'un rotor (7.2) de l'unité de moteur Torque (7).

11. Dispositif de rotation selon l'une quelconque des revendications 8 à 10, **caractérisé en ce que** le rotor (7.2) de l'unité de moteur Torque (7) tourne autour d'un axe de rotation (AS) qui coïncide avec l'axe de rotation et de pivotement (DA).

12. Dispositif de rotation selon l'une quelconque des revendications précédentes, **caractérisé par** un dispositif de capteur (8) qui détecte la position en rotation du corps rotatif (6) et / ou de l'unité de moteur Torque (7).

13. Dispositif de rotation selon l'une quelconque des revendications précédentes, **caractérisé en ce qu'**il est prévu au moins un dispositif de blocage (9), qui par l'intermédiaire d'un élément à boulon (9.1) déplaçable, coopère avec des orifices d'indexation (10) prévus sur le corps rotatif (6).
